# EUROPEAN PATENT APPLICATION

(11) **EP 1 647 919 A1**
(43) Date of publication of application: **19.04.2006**
(21) Application number: 04425777.2
(22) Date of filing: 15.10.2004
(51) Int. Cl.: G06K 17/00

(54) **Element for containing articles detectable by radio frequency identification labels (RFID)**

(71) Applicant: Filas S.P.A., 00192 Roma (IT)
(72) Inventor: Berliocchi, Marco, 00173 Roma (IT); Bolognesi, Alessandro, 00155 Roma (IT); Manenti, Maurizio, 00043 Ciampino (Roma) (IT)
(74) Representative: Iannone, Carlo Luigi

(57) **Abstract**

The invention relates to an element for containing articles detectable by radio frequency identification labels (RFID), said element comprising connection or interface means and having a substantially rectangular parallelepiped shape, said rectangular parallelepiped comprising two faced faces made up of material not-reflecting electromagnetic waves, or two empty faces, said element being characterised in that other four faces of said parallelepiped (3, 4, 4') are made up of material reflecting electromagnetic waves, and in that at least one of said reflecting faces comprises transceiver means (5) suitable to create an electromagnetic field within the volume of the rectangular parallelepiped individuated by said reflecting faces (3, 4, 4') and to receive and/or transmit information by said connection or interface means, and in that a reflecting face comprises a guide structure (6) suitable to deviate said incident electromagnetic field emitted by said transceiver means substantially toward said faces not reflecting electromagnetic waves or said empty faces of said rectangular parallelepiped (5).

## Description

The present invention relates to an element for containing articles detectable by radio frequency identification labels (RFID).

More specifically, the invention concerns an element that can be used for realising bookcase, containers and like, suitable to be implemented in storage and handling systems for RFID provided articles, allowing to avoid interferences between electromagnetic fields of adjacent elements, at the same time guaranteeing an efficient localisation of said articles.

In the following the specification will be addressed to the application of said element for realising shelves of a bookshelf, but it is well evident that the same must not be considered limited to this specific use.

As it is well known, the use of RFID *(radio Frequency Identification)* labels is always more diffused. They provide an integrated microchip, mainly provided with a processing unit and with a transceiver unit. By suitable systems provided with transceiver antenna, it is possible individuating the presence of articles to which said labels have been applied.

A processing unit and a database are generally provided, among the other elements, in the above-mentioned systems. By this kind of systems, it is possible to carry out an efficient handling of bookshops or libraries or stores. In facts, said systems allow a real time updating and control of stocks and their position.

Each RFID label is applied to an article, and, by a recognition code, memorised within the label, it can be univocally identified. By the control system, an operator can individuate the presence of a label within the store or on the shelf.

One example of application of a handling and control system based on RFID in a library is described in the International Patent Application N° WO 99/05660. A handling and control system is described in said document, for an inventory of elements included in a pre-set area, each one of said elements being provided with RFID label, receiving antennas being provided in the system.

Generally speaking, antennas of the RFID system are provided on the bookcases, on the shelves of which RFID provided articles are placed. In this way, it is possible revealing the presence, readily obtaining their position.

At present, said antennas are each one placed on the horizontal planes or on the vertical supports of the shelves of the bookcases. In this way, they make a "scanning" of the shelf, in order to reveal, and possibly signal, the presence of the article to be found.

3M Innovative Properties Company has suggested an example of this kind of solution. In fact, in US - B1 - 6,335,686, a system is described, comprising longitudinal shaped antennas, particularly suitable to be applied under the horizontal plane of each shelf, said antennas being controlled by suitable logic units.

A technical problem relevant to the application of the antennas on the bookcases is due to the material comprising the same bookcases. In fact, said bookcases are generally comprised of wood or of plastic material. Therefore, electromagnetic field emitted by said antennas tend to propagate to the adjacent bookcases, thus creating interferences that can jeopardise the scanning efficiency of the articles contained in the same bookcases.

In order to solve the above problems, it is possible realising horizontal and vertical planes of the bookcases by materials reflecting the radio frequencies. In this way, electromagnetic field would be "limited", thus avoiding that the same overlaps on the upper, lower and lateral shelves. However, in this way it would be created a stationary electromagnetic field in said shelves, within the intensity minimum level of the electromagnetic field "shadow zones" would be created. Therefore, in case close to said "shadow zones" it would be placed an article with a RFID label, it would not be possible revealing the same.

Therefore, the object of the present invention is that of suggesting elements that, if coupled in such a way to creating bookcases or structures containing articles, allows avoiding that the field of antennas placed in the same articles would interfere with those of the near articles.

Another object of the present invention is that of allowing that said modules allow a reliable scanning of the articles contained in the same.

It is therefore specific object of the present invention an element for containing articles detectable by radio frequency identification labels (RFID), said element comprising connection or interface means and having a substantially rectangular parallelepiped shape, said rectangular parallelepiped comprising two faced faces made up of material not-reflecting electromagnetic waves, or two empty faces, said element being characterised in that other four faces of said parallelepiped are made up of material reflecting electromagnetic waves, and in that at least one of said reflecting faces comprises transceiver means suitable to create an electromagnetic field within the volume of the rectangular parallelepiped individuated by said reflecting faces and to receive and/or transmit information by said connection or interface means, and in that a reflecting face comprises a guide structure suitable to deviate said incident electromagnetic field emitted by said transceiver means substantially toward said faces not reflecting electromagnetic waves or said empty faces of said rectangular parallelepiped.

Always according to the invention, said face comprising said transceiver means and said face comprising said guide structure can be parallel each other.

Still according to the invention, said guide structure can comprise at least a curved surface passing through an axis substantially parallel to said faces not reflecting electromagnetic waves or empty faces.

Preferably, according to the invention, said guide structure can comprise two curved surfaces tapered inward said rectangular parallelepiped and join each other along an axis substantially parallel to said faces not reflecting electromagnetic waves or empty faces.

Still according to the invention, said guide structure can be realised by at least a plane sloped with respect a face not reflecting electromagnetic waves or empty face, said plane passing through an axis substantially parallel with respect to said not reflecting faces.

Furthermore, according to the invention, said electromagnetic wave reflecting material can be metal, preferably steel, or iron or aluminium.

Advantageously, according to the invention, said element can be a modular element.

Still according to the invention, said electromagnetic field can have a frequency between 865 MHz and MHz.

Said transceiver means can comprise at least a transceiver antenna and at least a control logic unit.

Preferably, said connection or interface means can comprise cables and/or radio frequency transceiver means and/or network and/or infrared cables and/or GSM and/or GPRS and/or UMTS.

Furthermore, according to the invention, said reflecting faces of said rectangular parallelepiped are part of a plane of a furniture of a drawer or of a box.

It is further object of the present invention element for containing articles detectable by radio frequency identification labels (RFID), said element comprising connection or interface means and having a substantially rectangular parallelepiped shape, said rectangular parallelepiped comprising two faced faces made up of material not-reflecting electromagnetic waves, or two empty faces, said element being characterised in that three of the other four faces of said parallelepiped are made up of material reflecting electromagnetic waves, and in that at least one of said four reflecting faces comprises transceiver means suitable to create an electromagnetic field within the volume of the rectangular parallelepiped individuated by said four reflecting faces and to receive and/or transmit information by said connection or interface means and in that the latter of said four faces comprises a panel made up of material absorbing electromagnetic waves suitable to absorb the incident electromagnetic field emitted by said transceiver means.

Always according to the invention, said face comprising said transceiver means and said face comprising said panel can be parallel each other.

Still according to the invention, said material absorbing electromagnetic waves can be a ferromagnetic metal or foam rubber doped with carbon.

It still object of the present invention a system for searching articles, said articles, or groups of articles, each one providing a radio frequency identification label (RFID) having a memorised code, and being distributed in one or more elements, each article being contained in at least one element of said plurality of elements, said system being characterised in that it comprises a handling logic unit, data storage means and means for communication between a user and said system, said storage means comprising memorised codes of said RFID labels applied to said articles, and said logic unit being connected to said storage means and to said elements by said connection means or interface, said user accessing by said communication means to said storage means and selecting the searched article and said handling logic unit sending a message to said elements and said transceiver means scanning the relevant element and, in case of response from RFID label corresponding to the required code, sending a reply message to said handling logic unit indicating to said user the element wherein said article is contained.

Always according to the invention, said transceiver means send a message with information relevant to the presence of the whole content of said elements, making an inventory.

Still according to the invention, said communication means can comprise the GSM and/or GPRS and/or UMTS phone network.

Furthermore, according to the invention, said communication means or interface can comprise an antenna system.

Advantageously, said communication means or interface can comprise the Internet and/or a LAN network.

The present invention will be now described, for illustrative but not limitative purposes, according to its preferred embodiments, with particular reference to the figures of the enclosed drawings, wherein:
Figure 1 shows a bookcase for scanning RFID;
Figure 2 shows the intensity of a stationary electromagnetic field within a shelf of a bookcase according to the prior art;
Figure 3 shows the perspective view of an element to obtain a shelf of a bookcase according to figure 1;
Figure 4a shows a lateral view of the intensity of the field within a shelf of a bookcase according to figure 3;
Figure 4b shows a top view of the intensity of the field within a shelf of a bookcase according to figure 3;
Figures 5a - 5e show perspective views of embodiments of a guide structure according to the present invention;
Figure 6 shows the coupling of two containing elements according to the present invention; and
Figure 7 shows an embodiment of the handling and control system of bookcases realised according to the present invention.

In order to better understand the present invention, operation modes of the preferred embodiments of the present invention will be described, analogous modes being valid for the other embodiments.

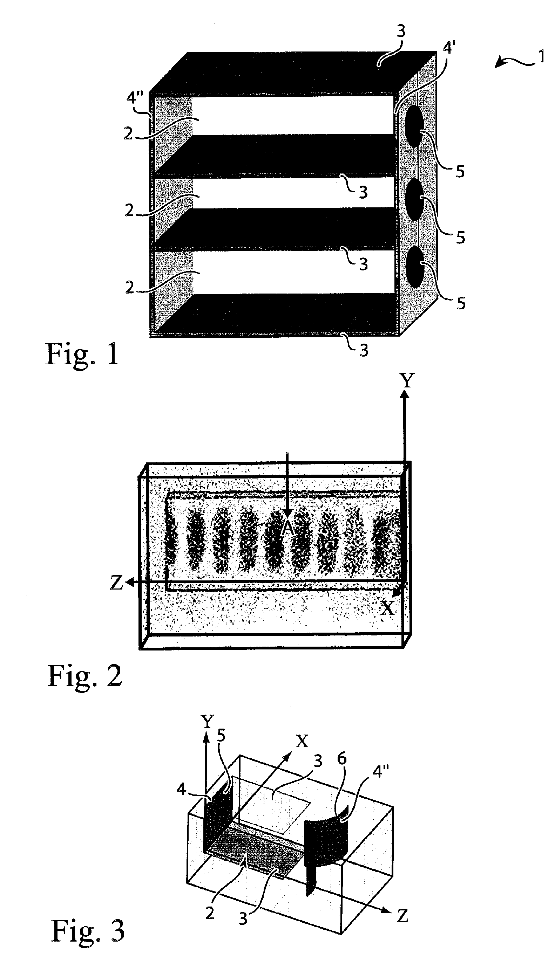

Making reference to figure 1, it is possible to observe a bookcase 1 comprising three shelves 2 providing each one a horizontal plane and two lateral vertical planes 4', 4".

In correspondence of each shelf 2, in this embodiment, antennas 5 are provided on the sides, on each one (not shown) of which a control unit can be provided. These units operate with a frequency in the UHF field between 865 MHz and 928 MHz.

As already described in the above, said bookcase 1 provides the entire element to be interfaced with a handling system as described in the above.

In order that the electromagnetic field generated by each antenna 5 is confined within the corresponding shelf 2, it is necessary that horizontal planes 3 and lateral vertical planes 4' and 4" are comprised of metal or that they provide inside interspaces made up of metal.

In case said planes or interspaces have a flat surface, a stationary electromagnetic field would be created in the plane, as it can be noted in figure 2 (darker inner zones of shelf 2 indicate a higher intensity of the field than in the clearer zones). Therefore, the field takes maximum value always in correspondence of some points and minimum value in other points, also with different frequencies (simulation in the figure has been realised with a frequency of 870 MHz) and at different times. This implies that, as already explained in the above, RFID labels placed where it is created a node (i.e. a minimum value of the field) are never revealed and thus also the book or other element with the RFID will be not revealed.

In order to avoid that a stationary field is created in the shelf, lateral vertical plane 4", opposed to the antenna 5, provides a guide structure 6, as it can be seen in figure 3, suitable to deviate the field so as to avoid wave reflection. In other words, the element, suitable to allow an optimum scanning of the volume, provides an antenna 5, the electromagnetic field of which is, in the present case, vertically confined between the planes 3, and having in the opposite part a guide structure 6 allowing avoiding wave reflections.

The above description referred to a single shelf 2, considered as modular element that coupled with others can realise a bookcase 1, can also be repeated for a whole bookcase, the latter too being considered as a modular element. In fact, for realising a bookcase 1 it is possible stacking a plurality of shelves 2, each one providing a corresponding antenna 5, as in figure 1, or placing a single antenna 5 in the vertical plane 4' for the whole bookcase and a guide structure 6 in the vertical plane 4".

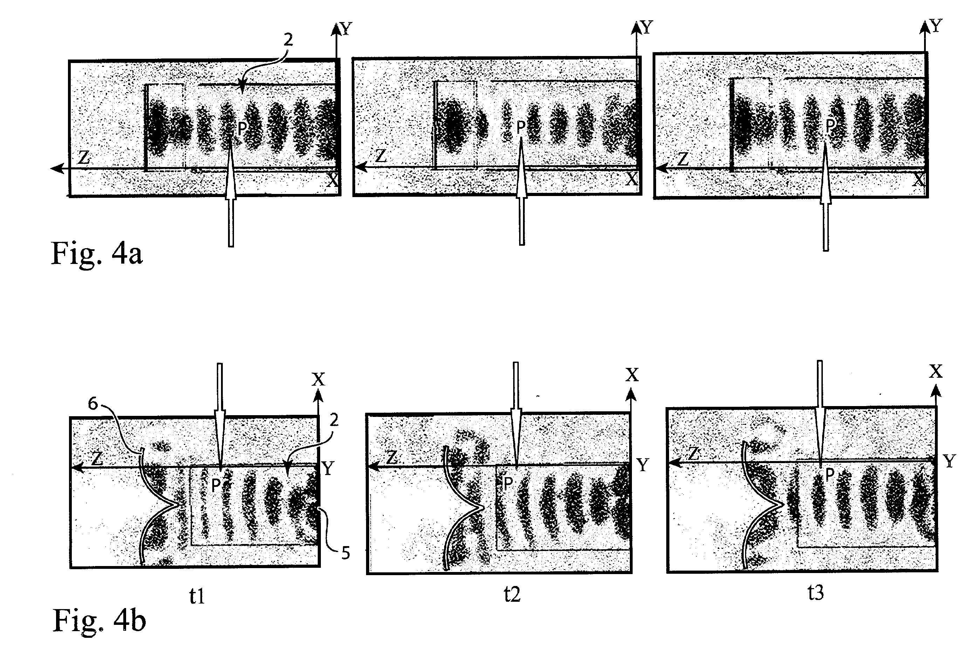

In order to better describe the operation of the guide structure 6, figures 4a and 4b will be taken into consideration, wherein the field (870 MHz frequency) within said shelf 2 at three different consecutive times t₁, t₂, t₃, in a lateral view and in a top view, respectively. Taking generic point P in the volume of shelf 2, it is possible noting that field intensity varies with time. Therefore, it is possible determining a time interval wherein in each point of the volume of shelf 2, field is different with respect to zero. In other words, a complete scanning is obtained of the volume of shelf 2, revealing the possible presence of RFID labels in each point.

The above effect is obtained thanks to the fact that the guide structure 6 does not allow reflections toward the antenna 5.

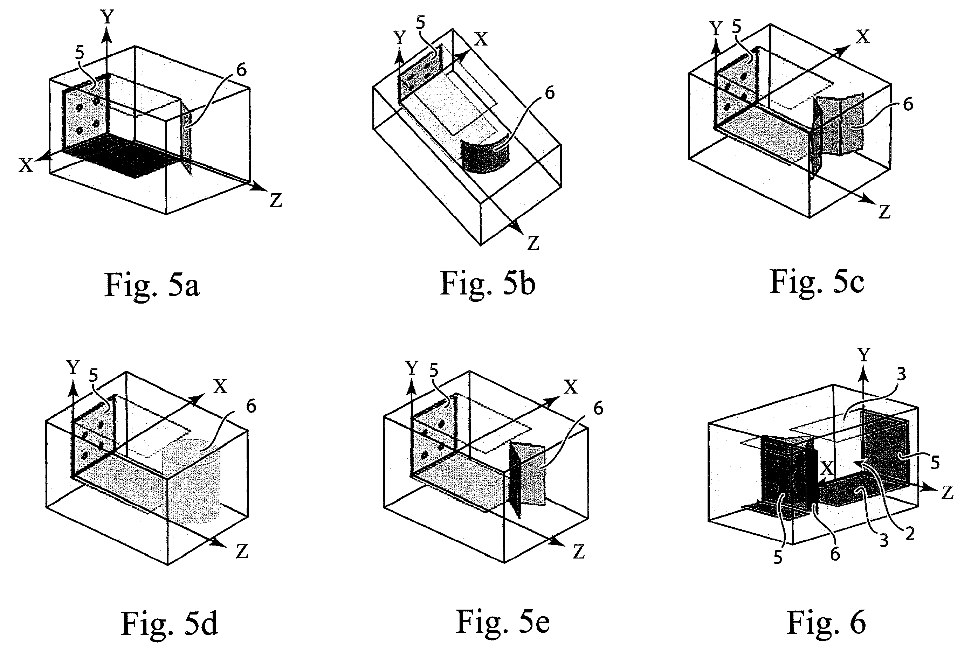

Some embodiments of the guide structure different from the embodiment of figure 3 are shown in figure 5. Particularly, figures 5a and 5b show wave guides 6 deviating the field only on one side of the shelf 2, while figures 5c, 5d and 5e show a guide structure 6 deviating the field on both sides of the shelf 2.

As already said, the present invention allows that also shelves 2 considered as elements, to be modular, as shown in figure 6. In fact, shelves can be added:
- Vertically: being the horizontal planes 3 made up of metal or providing a flat metallic interspace, field is vertically confined in the shelf 2. Therefore, it is possible placing a further shelf 2 both above and under the existing shelf 2;
- Horizontally: antenna 5 is oriented inward the shelf 2 and the field is not reflected but deviated by the guide structure 6 placed as (or in) the lateral vertical plane 4'. Thus, adding laterally a further shelf 2, in a longitudinal direction with respect to the first one positioning in such a way that the vertical lateral planes 4, providing the antennas, and the vertical lateral planes 4', providing the wave guides, are adjacent, no interference occurs between the fields generated within the same.

Therefore, it is easy understanding that it is possible assembling bookcases 1 with vertically positioned shelves 2 and coupling said bookcases in a longitudinal direction.

Obviously, it is not possible a horizontal coupling of the shelves in the transversal direction.

A further embodiment of the present invention provides introducing an absorbent panel in the vertical plane 4" instead of the guide structure 6, said panel being comprised of ferromagnetic material or of foam rubber "doped" with carbon. Said panel allows absorbing the incident electromagnetic field, thus limiting or even annulling the reflections.

It must be taken into consideration that said element can be used also for realising flat containers or drawers, suitably orienting the above mentioned planes.

Bookcase 1 comprised of containment modules according to the present invention can be implemented also in a remote system for controlling and handling inventory, permitting that bookcases can be easily displaced.

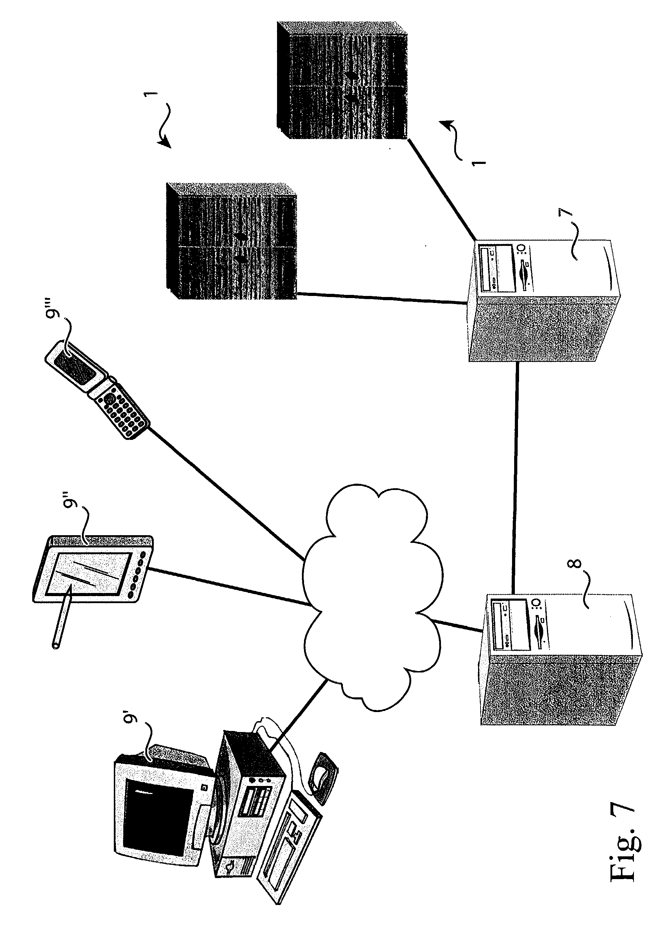

Making reference to figure 7, it is possible observing the operation scheme of an embodiment of a control and handlings system for a store containing articles on which RFID labels are provided. Particularly, it is possible observing a plurality of bookcases 1, the control units of which (not shown in the figures) are connected with a processing unit 7. Connection can be realised in different ways, e.g. by a cable, or by radio frequency. In the latter case a centralised antenna connected with said processing unit 7 and an antenna connected with the control unit of each shelf 1 can be for example used.

A data storage unit 8 is connected to the processing unit 7. Said unit 8 receives all the data from the processing unit 7 and organises the same, possibly recording them in a *database.*

Said data storage unit 8 can be consulted by users having remote interfaces 9, such as personal computer 9', PDA *(Personal Digital Assistant),* palm computers 9" or cellular phones 9"'.

On the basis of the previous specification, it can be observed that the basic feature of the present invention is the fact that it allows realising shelves in stores with search system based on RFID, the electromagnetic fields generated by antennas of which not interact each other, thus avoiding and guaranteeing the maximum revealing efficiency.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Element for containing articles detectable by radio frequency identification labels (RFID), said element comprising connection or interface means and having a substantially rectangular parallelepiped shape, said rectangular parallelepiped comprising two faced faces made up of material not-reflecting electromagnetic waves, or two empty faces, said element being **characterised in that** other four faces of said parallelepiped are made up of material reflecting electromagnetic waves, and **in that** at least one of said reflecting faces comprises transceiver means suitable to create an electromagnetic field within the volume of the rectangular parallelepiped individuated by said reflecting faces and to receive and/or transmit information by said connection or interface means, and **in that** a reflecting face comprises a guide structure suitable to deviate said incident electromagnetic field emitted by said transceiver means substantially toward said faces not reflecting electromagnetic waves or said empty faces of said rectangular parallelepiped.

2. Element according to claim 1, **characterised in that** said face comprising said transceiver means and said face comprising said guide structure can be parallel each other.

3. Element according to one of the preceding claims, **characterised in that** said guide structure comprises at least a curved surface passing through an axis substantially parallel to said faces not reflecting electromagnetic waves or empty faces.

4. Element according to claim 3, **characterised in that** said guide structure comprises two curved surfaces tapered inward said rectangular parallelepiped and join each other along an axis substantially parallel to said faces not reflecting electromagnetic waves or empty faces.

5. Element according to claim 1 or 2, **characterised in that** said guide structure is realised by at least a plane sloped with respect a face not reflecting electromagnetic waves or empty face, said plane passing through an axis substantially parallel with respect to said not reflecting faces.

6. Element according to one of the preceding claims, **characterised in that** said electromagnetic wave reflecting material is metal, preferably steel, or iron or aluminium.

7. Element according to one of the preceding claims, **characterised in that** said element is a modular element.

8. Element according to one of the preceding claims, **characterised in that** said electromagnetic field has a frequency between 865 MHz and MHz.

9. Element according to one of the preceding claims, **characterised in that** said transceiver means comprises at least a transceiver antenna and at least a control logic unit.

10. Element according to one of the preceding claims, **characterised in that** said connection or interface means comprises cables and/or radio frequency transceiver means and/or network and/or infrared cables and/or GSM and/or GPRS and/or UMTS.

11. Element according to one of the preceding claims, **characterised in that** said reflecting faces of said rectangular parallelepiped are part of a plane of a furniture of a drawer or of a box.

12. Element for containing articles detectable by radio frequency identification labels (RFID), said element comprising connection or interface means and having a substantially rectangular parallelepiped shape, said rectangular parallelepiped comprising two faced faces made up of material not-reflecting electromagnetic waves, or two empty faces, said element being **characterised in that** three of the other four faces of said parallelepiped are made up of material reflecting electromagnetic waves, and **in that** at least one of said four reflecting faces comprises transceiver means suitable to create an electromagnetic field within the volume of the rectangular parallelepiped individuated by said four reflecting faces and to receive and/or transmit information by said connection or interface means and **in that** the latter of said four faces comprises a panel made up of material absorbing electromagnetic waves suitable to absorb the incident electromagnetic field emitted by said transceiver means.

13. Element according to claim 12, **characterised in that** said face comprising said transceiver means and said face comprising said panel are parallel each other.

14. Element according to claim 12 or 13, **characterised in that** said material absorbing electromagnetic waves is a ferromagnetic metal or foam rubber doped with carbon.

15. System for searching articles, said articles, or groups of articles, each one providing a radio frequency identification label (RFID) having a memorised code, and being distributed in one or more elements as defined in claims from 1 to 11 or from 12 to 14, each article being contained in at least one element, said system being **characterised in that** it comprises a handling logic unit, data storage means and means for communication between a user and said system, said storage means comprising memorised codes of said RFID labels applied to said articles, and said logic unit being connected to said storage means and to said elements by said connection means or interface, said user accessing by said communication means to said storage means and selecting the searched article and said handling logic unit sending a message to said elements and said transceiver means scanning the relevant element and, in case of response from RFID label corresponding to the required code, sending a reply message to said handling logic unit indicating to said user the element wherein said article is contained.

16. System according to claim 15, **characterised in that** said transceiver means send a message with information relevant to the presence of the whole content of said elements, making an inventory.

17. System according to claim 15 or 16, **characterised in that** said communication means comprise the GSM and/or GPRS and/or UMTS phone network.

18. System according to one of the claims 15 - 17, **characterised in that** said communication means or interface comprise an antenna system.

19. System according to one of the claims 15 - 18, **characterised in that** said communication means or interface comprise the Internet and/or a LAN network.
